# EUROPÄISCHE PATENTSCHRIFT

(11) **EP 3 676 661 B1**
(45) Veröffentlichungstag und Bekanntmachung des Hinweises auf die Patenterteilung: **01.11.2023**
(21) Anmeldenummer: 18743556.5
(22) Anmeldetag: 30.07.2018
(51) Int. Cl.: G02F 1/00, E06B 3/67, E06B 9/24

(54) **ISOLIERVERGLASUNG MIT ELEKTRISCHEM ANSCHLUSSELEMENT**
INSULATING GLASS WITH ELECTRIC CONNECTION ELEMENT
VITRAGE ISOLANT DOTÉ D'UN ÉLÉMENT DE RACCORDEMENT ÉLECTRIQUE

(30) Priorität: 30.08.2017 EP 17188493
(43) Veröffentlichungstag der Anmeldung: 08.07.2020
(73) Patentinhaber: SAINT-GOBAIN GLASS FRANCE, 92400 Courbevoie (FR)
(72) Erfinder: MESSERE, Rino, 4577 Modave (BE)
(74) Vertreter: Gebauer, Dieter Edmund
(86) Internationale Anmeldenummer: PCT/EP2018/070585
(87) Internationale Veröffentlichungsnummer: WO 2019/042679

(56) Entgegenhaltungen:
- WO-A1-2017/112685

## Beschreibung

Die Erfindung betrifft eine Isolierverglasung, ein Verfahren zur Herstellung einer Isolierverglasung und eine Verwendung der Isolierverglasung.

Isolierverglasungen werden an Gebäuden aus ästhetischen Gründen immer häufiger in Glasfassaden verbaut, besonders wenn die Fassade als Ganzglasfassade optisch ausgeführt wird. Derartige Isolierverglasung besteht aus mindestens zwei Scheiben, die durch einen Abstandhalter auf Abstand zueinander gehalten werden. Die Scheiben können eine Beschichtung, insbesondere eine Wärmeschutz- und/oder Sonnenschutzbeschichtung aufweisen. Abstandshalter aus Materialien mit hoher Wärmeleitfähigkeit wie zum Beispiel Aluminium haben den Nachteil, dass sie bei niedrigen Außentemperaturen zu einem starken Abkühlen des Scheibenrands führen, was die Wärmedämmung verschlechtert und zur Bildung von Kondenswasser auf der Scheibe an der Gebäudeinnenseite führen kann. Abstandshalter aus Materialien mit geringerer Wärmeleitfähigkeit, sogenannte "Warme-Kante"-Systeme, werden daher bevorzugt eingesetzt. Abstandshalter aus polymeren Materialien haben diese verbesserten wärmedämmenden Eigenschaften. Es sind zum Beispiel formstabile Kunststoffprofile bekannt, die in Hohlräumen oder Aussparungen Trockenmittel oder eine mit Trockenmittel gefüllte Matrix enthalten. Oft müssen diese aus mehreren Komponenten bestehenden Abstandshalter in mehreren einzelnen Prozessstufen zusammengebaut werden, was die Produktion aufwendig gestaltet.

Die Verwendung thermoplastischer Materialien zur Herstellung von Abstandshaltern ist bekannt, die entweder als vorgefertigtes Profil hergestellt und anschließend zwischen den Scheiben fixiert werden, oder direkt auf die Scheibe extrudiert werden. Im ersten Fall müssen in einem separaten Produktionsschritt die Scheibenkontaktflächen des Abstandshalters mit einem Klebemittel versehen werden. Die Materialeigenschaften müssen genau aufeinander abgestimmt sein, um ein Ablösen des Abstandshalters von der Scheibe zu verhindern.

Spritzbare thermoplastische Abstandshalter (TPS Spacer) aus Dichtmaterialien wie Polyisobutylen und Butylkautschuk sind bekannt, die in der Matrix Trockenmittel enthalten, sodass ein Schritt zum Befüllen von Hohlkörpern in formstabilen Abstandhaltern entfällt. Zudem wird bei diesen Abstandshaltern kein separates Dichtmittel oder Klebemittel benötigt, da der Abstandshalter selbst bereits aus einem entsprechenden Dichtmaterial besteht. Diese Abstandshalter können direkt auf die Scheibe appliziert werden. Thermoplastische Abstandshalter sind ferner vorteilhaft in Bezug auf ihre vergleichsweise hohe mechanische Flexibilität, so dass eine unterschiedliche thermische Ausdehnung der einzelnen Komponenten einer Verglasung ausgeglichen werden kann. Dies ist vorteilhaft bei der Verwendung unterschiedlicher Scheibenmaterialien einer Isolierverglasung.

Die Wärmedämmung von Isolierverglasung ist deutlich besser als von Einfachglas und kann bei Dreifachverglasung mit speziellen Beschichtungen weiter verbessert werden. Insbesondere silberhaltige Beschichtungen ermöglichen eine geringe Transmission von infraroter Strahlung und senken somit die Temperatur im Gebäudeinneren. Neben der wichtigen Eigenschaft der Wärmeisolierung spielen im Bereich der Gebäudeverglasung zunehmend auch funktionelle sowie optische und ästhetische Merkmale eine wichtige Rolle.

Insbesondere bei Gebäuden mit einer großflächigen Glasaußenfassade spielt die Isolierwirkung nicht nur aus Kostengründen eine wichtige Rolle. Da die Wärmedämmung von dem in der Regel im Vergleich zum Mauerwerk sehr dünnen Glas schlechter ist, sind Verbesserungen in diesem Bereich notwendig.

Grundsätzlich erhöht jede zusätzliche Komponente die Komplexität einer Isolierverglasung. Ein Problem bei der Herstellung von solchen Isolierverglasungen mit funktionellen Beschichtungen besteht darin, die Beschichtung mit einer Versorgungsspannung elektrisch zu kontaktieren. Dabei werden elektrische Anschlusselemente der Beschichtung aus dem abgedichteten Innenraum nach außen geführt. Insbesondere alle von innerhalb der Verglasung in den äußeren Bereich der Isolierverglasung führenden Komponenten verschlechtern im Regelfall die Isolationswirkung der Verglasung. Vor allem die notwendigen Verbindungsstellen können ein Eindringen von Feuchtigkeit in die Isolierverglasung bewirken. Zudem kann das innerhalb der Isolierverglasung befindliche Inertgas, beispielsweise Stickstoff oder Argon, leicht entweichen. Neben einer Verschlechterung der Isolationswirkung werden häufig auch die optische Transparenz und der Gesamteindruck der Isolierverglasung verschlechtert.

DE 20 2006 020 185 U1 offenbart eine Isolierglaseinheit in Form einer Alarmglasscheibe. Die Alarmglasscheibe umfasst eine vorgespannte Scheibe, welche im Randbereich eine elektrisch leitende Struktur umfasst. Die Anschlusspunkte der leitenden Struktur liegen im Randbereich der Isolierverglasung, außerhalb des isolierenden Bereichs. Der Randbereich wird bevorzugt mit Polysulfid abgedichtet. Derartige Isolierglaseinheiten weisen eine sehr eingeschränkte Durchsichtfläche auf.

WO 2017/112685 A1 offenbart eine Anordnung von Stromschienen in einer Isolierglaseinheit mit elektrochromen Eigenschaften. Eine Stromschiene ist zwischen einer elektrochromen Schicht und einem Abstandshalter in eine Primärdichtung der Isolierglaseinheit eingebettet, d. h. die Stromschiene ist sandwichartig zwischen dem im Wesentlichen transparenten Substrat und dem Abstandshalter angeordnet. Die beschriebenen Ausführungsformen umfassen Stromschienen für elektrochrome oder andere optische Zustandswechseleinrichtungen. Die Stromsammelschienen sind dazu vorgesehen sich der Umgebung farblich anzupassen. Eine solche Stromschiene kann auch transparent sein.

Der Erfindung liegt die Aufgabe zugrunde, eine Isolierglasverglasung bereitzustellen, bei der die Durchsichtfläche erweitert wird.

Die Aufgabe der vorliegenden Erfindung wird erfindungsgemäß durch eine Isolierverglasung gemäß Anspruch 1 gelöst. Bevorzugte Ausführungen gehen aus den Unteransprüchen hervor.

Die erfindungsgemäße Isolierverglasung umfasst eine erste Scheibe, die auf einer innenseitigen Oberfläche zumindest teilweise eine Beschichtung sowie zwei Sammelleiter zur Kontaktierung der Beschichtung aufweist, eine zweite Scheibe, einen die erste und zweite Scheibe umlaufenden Abstandhalter, der einen polymeren Grundkörper, zwei Scheibenkontaktflächen, eine Verglasungsinnenraumfläche und eine Außenfläche aufweist. Derartige Abstandshalter aus einem Dichtmaterial werden auch als thermoplastische Abstandshalter (TPS) bezeichnet und zeichnen sich durch besonders lange Lebensdauer aus. Die Isolierverglasung umfasst weiterhin einen zwischen der ersten und der zweiten Scheibe eingeschlossenen Innenraum, einen äußeren Scheibenzwischenraum angrenzend an die Außenfläche, in dem eine äußere Abdichtung eingebracht ist, und ein elektrisches Anschlusselemente zur elektrischen Kontaktierung der Beschichtung mit einem äußeren und einem inneren Ende, dessen äußeres Ende aus der äußeren Abdichtung herausragt. Die erste Scheibe liegt an einer ersten Scheibenkontaktfläche des Abstandshalters an und die zweite Scheibe liegt an einer zweiten Scheibenkontaktfläche des Abstandshalters an. Das innere Ende des Anschlusselements und ein Sammelleiter sind elektrisch verbunden, wobei diese Kontaktierung zwischen dem Abstandshalter und der ersten Scheibe außerhalb eines von dem Abstandhalter umlaufend gebildeten Innenraums angeordnet sind.

Die Vorteile dieser Isolierverglasung ergeben sich aus der erfindungsgemäßen Kombination eines Abstandshalters aus einem Dichtmaterial und einer Scheibe mit einer Beschichtung sowie deren Kontaktierung außerhalb des Innenraums der Isolierverglasung. Dadurch kann die direkte Durchsichtfläche, auch Sichtfeld der Isolierverglasung genannt, im hohen Maße erweitert werden. Der thermoplastische Abstandshalter besitzt, im Vergleich zu nach dem Stand der Technik bekannten starren Abstandshaltern, eine höhere Flexibilität, so dass die unterschiedliche thermische Dehnung angrenzender Materialien sehr gut kompensiert werden kann. Dies ist besonders vorteilhaft in Kombination mit der Verwendung eines Anschlusselements zur Kontaktierung einer auf der Scheibe aufgebrachten Beschichtung. Da der Abstandshalter unmittelbar in den Scheibenzwischenraum extrudiert wird, kann dieser sich der Kontur des Anschlusselements optimal anpassen, wodurch ein sehr stabiler Verbund entsteht und darüber hinaus eine zusätzliche Verklebung der Bauteile nicht notwendig ist. Dabei erstreckt sich das Anschlusselement aus dem Abstandhalter heraus durch die äußere Abdichtung nach außen.

Vorteilhafterweise weist die Isolierverglasung einen opaken Randbereich auf, der dem inneren Ende des Anschlusselements und dem Sammelleiter zugeordnet ist und zur Abdeckung des inneren Endes des Anschlusselements sowie des Sammelleiters vorgesehen ist. Die Kontaktierung des inneren Endes des Anschlusselements mit dem Sammelleiter findet in dem äußeren opaken Randbereich der Isolierverglasung statt. Der äußere, opake (undurchsichtige) Randbereich kann eine Färbung, insbesondere schwarze Färbung, der ersten Scheibe und/oder einen umlaufenden Scheibenrahmen im Randbereich umfassen.

Der äußere, opake Randbereich erstreckt sich am äußeren Rand der ersten Scheibe bevorzugt mit einer Breite von 10 mm bis 35 mm, besonders bevorzugt 13 mm. Dies ist vorteilhaft bezüglich eines verbesserten direkten Durchsichtbereichs der Isolierverglasung.

Die Scheiben der Isolierverglasung sind insbesondere Isolierglasscheiben, Verbundscheiben oder Einzelglasscheiben. Eine Verbundscheibe kann mindestens zwei Scheiben, die über eine Zwischenschicht miteinander verbunden sind, umfassen. Die Zwischenschicht kann vorzugsweise ein thermoplastischer Kunststoff wie Polyvinylbutyral (PVB), Ethylenvinylacetat (EVA), Polyurethan (PU), Polyethylenterephthalat (PET) oder mehrere Schichten davon, bevorzugt mit Dicken von 0,3 mm bis 0,9 mm, sein. Der Scheibenzwischenraum kann mit Luft oder einem Gas, insbesondere Edelgas wie Argon oder Krypton, gefüllt sein.

In einer vorteilhaften Ausgestaltung der erfindungsgemäßen Isolierverglasung können die Scheiben aus Flachglas, Floatglas, Kalk-Natron-Glas, Quarzglas oder Borosilikatglas bestehen. Die Dicke jeder Scheibe kann variieren und so den Erfordernissen des Einzelfalls angepasst werden. Vorzugsweise werden Scheiben mit Standardstärken von 4 mm bis 19 mm und bevorzugt von 3 mm bis 19 mm verwendet. Bevorzugt ist zumindest eine Scheibe als Strukturglas ausgebildet.

Die Scheiben können farblos oder gefärbt sein und/oder eine Beschichtung, insbesondere eine transparente und/oder elektrisch leitfähige Beschichtung oder zumindest eine elektrisch schaltbare Beschichtung, aufweisen. Eine derartige Beschichtung kann als Beleuchtung, Heizung oder Antenne fungieren oder in einer elektrisch schaltbaren Verglasung wie Displays oder elektrochromen Verglasung verwendet werden.

Die elektrochrome Verglasung umfasst zumindest zwei Elektrodenschichten und zwei zwischen den beiden Elektrodenschichten befindliche, elektrochemisch aktive Schichten, die durch eine Elektrolytschicht voneinander getrennt sind. Die beiden aktiven Schichten sind jeweils in der Lage kleine Ionen reversibel einzulagern, wobei zumindest eine der beiden Schichten aus einem elektrochromen Material besteht, das über verschiedene Oxidationszustände verfügt, die dem ein- bzw. ausgelagerten Zustand der Ionen entsprechen und eine unterschiedliche Färbung haben. Durch Anlegen von elektrischen Spannungen verschiedener Polarität kann die Ein- bzw. Auslagerung der Ionen gesteuert werden, um dadurch gezielt Einfluss auf die optische Transmission der Beschichtung zu nehmen.

In einer vorteilhaften Weiterbildung der erfindungsgemäßen Isolierverglasung weist die erste Scheibe eine elektrisch leitfähige Beschichtung auf, die transparent ist. Die transparente, elektrisch leitfähige Beschichtung kann für elektromagnetische Strahlung, vorzugsweise elektromagnetische Strahlung einer Wellenlänge von 300 bis 1.300 nm, insbesondere für sichtbares Licht von 390 nm bis 780 nm, durchlässig sein. "Durchlässig" bedeutet, dass die Gesamttransmission der Scheibe insbesondere für sichtbares Licht bevorzugt >70% und insbesondere >75% ist.

Die transparente, elektrisch leitfähige Beschichtung ist bevorzugt eine funktionelle Beschichtung, besonders bevorzugt eine funktionelle Beschichtung mit Sonnenschutz-Wirkung. Eine Beschichtung mit Sonnenschutzwirkung weist reflektierende Eigenschaften im Infrarot-Bereich und damit im Bereich der Sonneneinstrahlung auf. Die transparente, elektrisch leitfähige Beschichtung kann besonders niedrige Emissivitäten (Low-E) aufweisen. Dadurch wird ein Aufheizen des Innenraums eines Gebäudes infolge von Sonnenstrahlung vorteilhaft vermindert.

Solche Beschichtungen sind dem Fachmann bekannt und enthalten typischerweise zumindest ein Metall, insbesondere Silber oder eine silberhaltige Legierung. Die transparente, elektrisch leitfähige Beschichtung kann eine Abfolge mehrerer Einzelschichten umfassen, insbesondere zumindest eine metallische Schicht und dielektrische Schichten, die beispielsweise zumindest ein Metalloxid enthalten. Das Metalloxid enthält bevorzugt Zinkoxid, Zinnoxid, Indiumoxid, Titanoxid, Siliziumoxid, Aluminiumoxid oder dergleichen sowie Kombinationen von einem oder mehreren daraus. Das dielektrische Material kann auch Siliziumnitrid, Siliziumcarbid oder Aluminiumnitrid enthalten.

Dieser Schichtaufbau wird im Allgemeinen durch eine Folge von Abscheidevorgängen erhalten, die durch ein Vakuumverfahren wie die magnetfeldgestützte Kathodenzerstäubung durchgeführt wird. Auf beiden Seiten der Silberschicht können auch sehr feine Metallschichten vorgesehen werden, die insbesondere Titan oder Niob enthalten. Die untere Metallschicht dient als Haft- und Kristallisationsschicht. Die obere Metallschicht dient als Schutz- und Getterschicht, um eine Veränderung des Silbers während der weiteren Prozessschritte zu verhindern.

Besonders geeignete transparente, elektrisch leitfähige Beschichtungen enthalten mindestens ein Metall, bevorzugt Silber, Nickel, Chrom, Niob, Zinn, Titan, Kupfer, Palladium, Zink, Gold, Cadmium, Aluminium, Silizium, Wolfram oder Legierungen daraus, und/oder mindestens eine Metalloxidschicht, bevorzugt Zinn-dotiertes Indiumoxid (ITO), Aluminium-dotiertes Zinkoxid (AZO), Fluor-dotiertes Zinnoxid (FTO, SnO2:F), Antimon-dotiertes Zinnoxid (ATO, SnO2:Sb), und/oder Kohlenstoffnanoröhrchen und/oder optisch transparente, elektrisch leitfähige Polymere, bevorzugt Poly(3,4-ethylenedioxythiophene), Polystyrensulfonat, Poly(4,4-dioctylcylopentadithiophen), 2,3-Dichloro-5,6-dicyano-1,4-benzoquinon, Gemische und/oder Copolymere davon.

Die Dicke der transparenten, elektrisch leitfähigen Beschichtung kann breit variieren und den Erfordernissen des Einzelfalls angepasst werden. Im Sinne der Erfindung wird unter Dicke der transparenten, elektrisch leitfähigen Beschichtung eine mittlere Ausdehnung senkrecht zur Oberfläche der ersten Scheibe verstanden. Wesentlich ist dabei, dass die Dicke der transparenten, elektrisch leitfähigen Beschichtung nicht so hoch werden darf, dass sie für elektromagnetische Strahlung, vorzugsweise elektromagnetische Strahlung einer Wellenlänge von 300 nm bis 1.300 nm (Nanometer) und insbesondere sichtbares Licht von 390 nm bis 780 nm, undurchlässig wird. Die transparente, elektrisch leitfähige Beschichtung weist bevorzugt eine Schichtdicke von 10 nm (Nanometer) bis 5 µm (Mikrometer) und besonders bevorzugt von 30 nm bis 1 µm auf.

Der Flächenwiderstand der transparenten, elektrisch leitfähigen Beschichtung beträgt bevorzugt von 0,35 Ohm/Quadrat bis 200 Ohm/Quadrat, bevorzugt 0,5 Ohm/Quadrat bis 200 Ohm/Quadrat, ganz besonders bevorzugt von 0,6 Ohm/Quadrat bis 30 Ohm/Quadrat, und insbesondere von 2 Ohm/Quadrat bis 20 Ohm/Quadrat. Die transparente, elektrisch leitfähige Beschichtung kann prinzipiell noch niedrigere Flächenwiderstände als 0,35 Ohm/Quadrat aufweisen, insbesondere wenn bei deren Verwendung nur eine geringe Lichttransmission benötigt wird.

In einer vorteilhaften Ausgestaltung der erfindungsgemäßen Isolierverglasung ist die elektrisch leitfähige Beschichtung auf mindestens 70%, bevorzugt 80% bis 100% und besonders bevorzugt 98% bis 100% der Durchsichtfläche der ersten Scheibe angeordnet. Die Durchsichtfläche ist dabei die Fläche der ersten Scheibe, bei der die Durchsicht nicht durch den opaken Randbereich, den Rahmen, Abstandshalter oder andere Anbaubauteile verhindert ist.

In einer vorteilhaften Weiterbildung der erfindungsgemäßen Isolierverglasung umfasst das Anschlusselement ein elektrisches Bauelement, insbesondere ein Kabel und/oder eine biegsame Leiterplatine mit mindestens einem elektrischen Bauelement. Das Kabel, insbesondere ein Flachkabel oder Rundkabel, kann einen oder mehrere Leiter aufweisen. Biegsame Leiterplatinen weisen meist einen flexiblen Kunststoffträger auf, beispielsweise Polyesterfolie, Polyimid, Mylar oder Nylon, der mit einer elektronischen Schaltung bedruckt ist.

Das innere Ende des Anschlusselements kontaktiert den Sammelleiter bevorzugt mit einem Abstand von 10 mm bis 13 mm vom äußeren Rand der Isolierverglasung.

Der Abstandshalter weist bevorzugt eine Höhe von ca. 9 mm auf.

Erfindungsgemäß befindet sich im äußeren Scheibenzwischenraum angrenzend an den Abstandshalter die äußere Abdichtung. Die äußere Abdichtung kann sowohl in Kombination mit einem primären Dichtmittel verwendet werden, als auch unmittelbar an den Grundkörper des Abstandshalters grenzen. Die äußere Abdichtung füllt den äußeren Scheibenzwischenraum in seiner gesamten Breite zwischen der ersten Scheibe und der zweiten Scheibe aus. Die äußere Abdichtung bewirkt eine Verklebung der ersten und der zweiten Scheibe und gewährleistet somit eine ausreichende mechanische Stabilität der Isolierverglasung. Die äußere Abdichtung enthält bevorzugt ein Polymer oder silanmodifiziertes Polymer, besonders bevorzugt organische Polysulfide, Silikone, raumtemperaturvernetzenden Silikonkautschuk, hochtemperaturvernetzenden Silikonkautschuk, peroxidisch-vernetzten Silikonkautschuk und/oder additions-vernetzten-Silikonkautschuk, Polyurethane und/oder Butylkautschuk. Derartige Stoffe haben eine sehr gute Haftung auf Glas, sodass die äußere Abdichtung vor allem der Verklebung der Scheiben dient und zur mechanischen Stabilität der Isolierverglasung beiträgt. In einer optionalen Ausgestaltung können auch Zusätze zur Erhöhung der Alterungsbeständigkeit, beispielsweise UV Stabilisatoren, enthalten sein.

Die erste Scheibe oder die zweite Scheibe können über einen weiteren Abstandshalter mit einer weiteren dritten Scheibe verbunden sein und so eine Isolierverglasung mit Dreifach-Verglasung bilden.

Die Erfindung umfasst ferner ein Verfahren zur Herstellung der erfindungsgemäßen Isolierverglasung. In einem ersten Schritt des erfindungsgemäßen Verfahrens wird eine Beschichtung mit einem Anschlusselement elektrisch kontaktiert, wobei die Beschichtung auf einer innenseitigen Oberfläche einer ersten Scheibe aufgebracht ist. Danach wird ein Abstandshalter aus einem polymeren Grundkörper in einen Zwischenraum zwischen erster Scheibe und zweiter Scheibe extrudiert. Der Abstandshalter wird dabei über jeweils eine Scheibenkontaktfläche zwischen der ersten Scheibe und einer zweiten Scheibe angebracht. Anschließend wird die Anordnung verpresst und in den äußeren Scheibenzwischenraum eine äußere Abdichtung eingebracht.

Bevorzugt wird der innere Scheibenzwischenraum der Scheibenanordnung mit einem Schutzgas gefüllt.

Ein weiterer Aspekt der Erfindung umfasst die Verwendung einer erfindungsgemäßen Isolierverglasung als Gebäudeinnenverglasung, Gebäudeaußenverglasung und/oder Fassadenverglasung.

Im Folgenden wird die Erfindung anhand Zeichnungen und Ausführungsbeispielen näher erläutert. Eine Zeichnung ist eine schematische Darstellung und nicht maßstabsgetreu. Die Zeichnung schränkt die Erfindung in keiner Weise ein.

Es zeigen:
- Figur 1: eine Querschnittdarstellung einer erfindungsgemäßen Isolierverglasung mit einem Anschlusselement,
- Figur 2: eine weitere Ausführungsform der erfindungsgemäßen Isolierverglasung mit einem Anschlusselement, und
- Figur 3: ein Flussdiagram einer Ausführungsform des erfindungsgemäßen Verfahrens zur Herstellung einer Isolierverglasung.

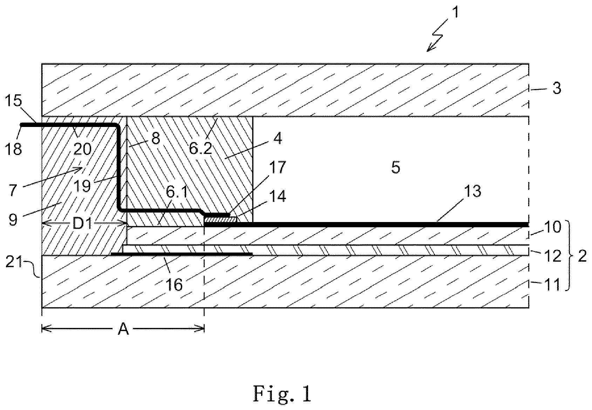

Fig. 1 zeigt eine Darstellung einer erfindungsgemäßen Isolierverglasung 1 im Querschnitt. Die Isolierverglasung 1 umfasst zwei Scheiben 2 und 3, die über einen Abstandshalter 4 verbunden sind. Zwischen der ersten Scheibe 2 und der parallel dazu angeordneten zweiten Scheibe 3 ist der Abstandhalter 4 angebracht. Der Abstandshalter 4 weist eine Höhe von ca. 9 mm auf. Weiter weist der Abstandshalter 4 einen Grundkörper auf, an dem ein innerer Innenraum 5 angrenzt. Der an den Abstandhalter 4 angrenzende Innenraum 5 wird als der von der ersten Scheibe 2 und der zweiten Scheibe 3 begrenzte Raum definiert. Der Innenraum 5 weist eine Durchsichtfläche auf und bildet somit einen besonders weiten direkten Sichtbereich der Isolierverglasung 1. Die erste Scheibe 2 grenzt an eine erste Scheibenkontaktfläche 6.1 und die zweite Scheibe 3 grenzt an die zweite Scheibenkontaktfläche 6.2.

Ein äußerer Scheibenzwischenraum 7 wird begrenzt durch die erste Scheibe 2, die zweite Scheibe 3 und eine Außenfläche 8 des Abstandhalters 4. Im äußeren Scheibenzwischenraum 7 befindet sich angrenzend an die Außenfläche 8 des Abstandhalters 4 eine, auch als sekundäres Dichtmittel bezeichnete, Abdichtung 9. Die Abdichtung 9 enthält im Wesentlichen Silikon. Die Abdichtung 9 kann auch Zusätze zur Erhöhung der Alterungsbeständigkeit, wie z.B. UV Stabilisatoren, enthalten.

Die zweite Scheibe 3 besteht aus einer Glasscheibe aus Kalk-Natron-Glas mit einer Dicke von 4 mm. Die erste Scheibe 2 ist als Verbundscheibe ausgeführt. Die erste Scheibe 2 ist zur Abtrennung eines Außenraums von einem Innenraum eines Gebäudes vorgesehen. Die erste Scheibe 2 besteht aus zwei Glasscheiben 10 und 11 aus Kalk-Natron-Glas mit unterschiedlichen Dicken. Eine dünne Glasscheibe 10 mit einer Dicke von 2,2 mm (Millimeter) ist über eine Laminierfolie 12 aus Polyvinylbutyral mit einer Dicke von 0,76 mm mit einer dicken Glasscheibe 11 verbunden. Die Laminierfolie 12 kann auch einen thermoplastischen Kunststoff, wie Polyvinylbutyral (PVB), Ethylenvinylacetat (EVA), Polyurethan (PU), Polyethylenterephthalat (PET) oder mehrere Schichten davon enthalten.

Die dicke Glasscheibe 11 weist eine Dicke von ca. 4 mm auf. Die Außenseite der dicken Glasscheibe 11 weist nach außen hin, wohingegen die Innenseite der dicken Glasscheibe 11 über die Laminierfolie 12 mit der Außenseite der dünnen Glasscheibe 10 verbunden ist. Mit Innenseite wird im Sinne der Erfindung die dem Innenraum 5 zugewandte Seite der Glasscheiben bezeichnet. Mit Außenseite wird die der äußeren Umgebung zugewandte Scheibenseite bezeichnet. Zwischen der Laminierfolie 12 und der dicken Glasscheibe 11 befindet sich ein opak gefärbter Randbereich 16. Die dicke Glasscheibe 11 und die dünne Glasscheibe 10 mit der Laminierfolie 12 sind nicht randbündig ausgeführt. Die dünne Glasscheibe 10 mit Laminierfolie 12 kann um einen Abstand von ca. 8 mm, der einer Dicke D1 der Abdichtung 9 entspricht, versetzt vom Scheibenrand der dicken Glasscheibe 11 angeordnet sein.

Die dünne Glasscheibe 10 weist auf der innenseitigen Oberfläche eine elektrisch leitfähige Beschichtung 13 auf. Die elektrisch leitfähige Beschichtung 13 ist transparent. Die elektrisch leitfähige Beschichtung 13 erstreckt sich nahezu vollständig über die innenseitige Oberfläche der dünnen Glasscheibe 10, abzüglich einer Randentschichtung mit einer Breite von beispielsweise 10 mm (Millimeter) vom Scheibenrand der dicken Glasscheibe 11. Die elektrisch leitfähige Beschichtung 13 ist über Sammelleiter 14 (bus bar) und Anschlusselement 15 mit einer Spannungsquelle verbunden. Das Anschlusselement 15 verfügt über ein inneres Ende 17 und ein äußeres Ende 18. Das innere Ende 17 des Anschlusselements 15 ist zur Kontaktierung mit einem Sammelleiter 14 vorgesehen, wohingegen das äußere Ende 18 des Anschlusselements 15 mit einer nicht dargestellten Spannungsquelle verbunden ist.

Die elektrisch leitfähige Beschichtung 13 wurde mittels Magnetron-Sputtern auf der innenseitigen Oberfläche der dünnen Glasscheibe 10 abgeschieden. Die elektrisch leitfähige Beschichtung 13 umfasst drei leitfähige Silberschichten mit zwischen diesen angeordneten dielektrischen Schichten und verfügt über einen Schichtwiderstand von 0,9Ω/Quadrat.

Der Sammelleiter 14 wurde durch Aufdrucken einer leitfähigen Paste hergestellt und auf der elektrisch leitfähigen Beschichtung 13 elektrisch kontaktiert. Die leitfähige Paste enthält Silber-Partikel und Glasfritten. Die Schichtdicke der eingebrannt leitfähigen Paste beträgt ca. 5 µm bis 20 µm (Mikrometer). Alternativ werden auch dünne und schmale Metallfolienstreifen oder Metalldrähte als Sammelleiter 14 verwendet werden, die Kupfer oder Aluminium enthalten. Der Sammelleiter 14 verläuft im Randbereich mit einem Abstand A vom Scheibenrand der dicken Glasscheibe 11, parallel zu einer Seitenkante der dünnen Glasscheibe 10. Der Abstand A des Sammelleiters 14 von dem Scheibenrand der dicken Glasscheibe 11 beträgt beispielsweise 10 mm.

Der elektrische Kontakt zwischen der elektrisch leitfähigen Beschichtung 13 und Sammelleiter 14 sowie zwischen Sammelleiter 14 und Anschlusselement 15 wurde durch Auflöten oder Kleben mit einem elektrisch leitfähigen Kleber hergestellt. Der Sammelleiter 14 und die Kontaktierung mit dem inneren Ende des Anschlusselements 15 befinden sich auf der Höhe des opak gefärbten Randbereichs 16, sodass sie von außen nicht sichtbar sind. Der opak gefärbte Randbereich 16 ist ca. 10 mm breit und deckt somit vollständig den Sammelleiter 14 ab.

Das Anschlusselement 15 besteht aus einem flexiblen Kabel, auch Flachkabel oder Flachbandleiter genannt. Das Kabel kann T-förmig ausgebildet sein und an seinen zwei Seitenarmen zwei metallische Kontaktierungsflächen aufweisen, die zur Kontaktierung mit dem Sammelleiter 14 vorgesehen sind. Die Seitenarme des T-förmigen Kabels bilden das innere Ende des Anschlusselements 15. Der Sammelleiter 14 bedeckt vollständig die Kontaktierungsflächen des T-förmigen Kabels. Das innere Ende des Anschlusselements 15 kontaktiert den Sammelleiter 14 bevorzugt mit einem Abstand ca. 10 mm vom äußeren Rand 21 der Isolierverglasung 1. Das Anschlusselement 15 verläuft bis zum Austritt aus dem Grundkörper des Abstandhalters 4 parallel zu der ersten Scheibe 2. In der Abdichtung 9 verläuft das Anschlusselement 15 in einem ersten Abschnitt 19 quer zur Längsrichtung des Abstandshalters 4. Im zweiten Abschnitt 20 verläuft das Anschlusselement 15 parallel zur zweiten Scheibe 3 und tritt am äußeren Rand 21 der Isolierverglasung 1 aus der Abdichtung 9 heraus.

Alternativ kann das Anschlusselement 15 parallel zu der Längsachse des Abstandshalters 4 verlaufen und an einer seitlichen Kante der Isolierverglasung 1 herausragen.

Weiterhin kann die Isolierverglasung 1 Dichtungsmittel umfassen, die dazu vorgesehen sind die Isolierverglasung 1 gegen Feuchtigkeit abzudichten. Auch eine Gasdichtigkeit ist von wesentlicher Bedeutung für die Isolierverglasung 1, vor allem wenn der Innenraum 5 der Isolierverglasung 1 mit einem Wärmedämmgas, z.B. Argon, gefüllt ist.

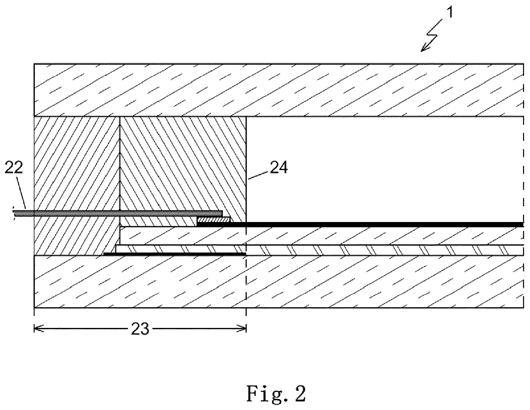

Fig. 2 zeigt eine weitere Ausführungsform der erfindungsgemäßen Isolierverglasung 1. Die Isolierverglasung 1 aus Figur 2 ist nahezu identisch aufgebaut. Im Gegensatz zu der Isolierverglasung 1 aus Figur 1 ist das Anschlusselement 15 gemäß Figur 2 als eine biegsame Leiterplatine 22 ausgeführt. Die biegsame Leiterplatine 22 verfügt über ein inneres Ende und ein dem inneren Ende gegenüberliegendes äußeres Ende. Die biegsame Leiterplatine 22 kontaktiert an ihrem inneren Ende elektrisch den Sammelleiter 14. Zusätzlich weist die Isolierverglasung 1 in Figur 2 einen äußeren umlaufenden Rahmen 23 anstatt des opak gefärbten Randbereichs 16 auf. Der Rahmen 23 ist an der Außenseite der dicken Scheibe 11 angeordnet und verdeckt sowohl den Sammelleiter 14 als auch die Kontaktierung zwischen dem Sammelleiter 14 und dem inneren Ende der Leiterplatine 22.

Durch die Anordnung der Kontaktierung zwischen Sammelleiter 14 und dem inneren Ende der Leiterplatine 22 zwischen dem Abstandshalter 4 und der ersten Scheibe 2 ist sichergestellt, dass diese Kontaktierung von außen nicht sichtbar ist. Dadurch ändert sich die Durchsichtfläche der Isolierverglasung 1, was mit einer Optimierung des direkten Sichtbereichs der Isolierverglasung 1 einhergeht.

Es versteht sich, dass die Erfindung nicht auf ein flexibles Kabel oder eine Leiterplatine als Anschlusselement 15 beschränkt ist.

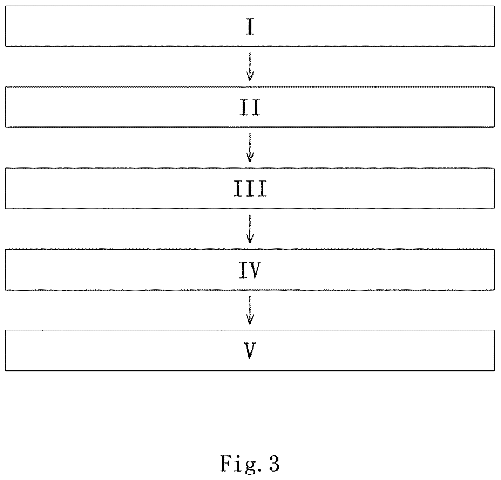

Figur 3 zeigt ein Flussdiagramm einer möglichen Ausführungsform des erfindungsgemäßen Verfahrens zur Herstellung einer Isolierverglasung 1, umfassend die Schritte I bis V:
- Schritt I: Elektrisch kontaktieren einer Beschichtung 13 mit einem Anschlusselement 15, wobei die Beschichtung 13 auf einer innenseitigen Oberfläche einer ersten Scheibe 2 angeordnet ist,
- Schritt II: Extrudieren eines Abstandshalter 4 aus einem polymeren Grundkörper auf der ersten Scheibe 2, so dass der Abstandhalter 4 ein inneres Ende 17 des Anschlusselements 15 umfasst,
- Schritt III: Anordnen der zweiten Scheibe 3 auf dem Abstandshalter 4, so dass der Abstandhalter 4 über jeweils eine Scheibenkontaktfläche 6.1, 6.2 zwischen der ersten Scheibe 2 und der zweiten Scheibe 3 angeordnet ist,
- Schritt IV: Verpressen der Anordnung aus erste Scheibe 2, zweiter Scheibe 3 und dem Abstandhalter 4 miteinander und
- Schritt V: Verfüllen des äußeren Scheibenzwischenraums 7 mit einer äußeren Abdichtung 9.

Bei dem Schritt des Verpressens werden die erste Scheibe 2 und die zweite Scheibe 3 jeweils gegen die erste bzw. zweite Kontaktflächen 6.1, 6.2 des Abstandshalters 4 an allen vier Kanten der Scheiben 2, 3 umfänglich gepresst. Dadurch entsteht die verbunden feste Isolierverglasung 1 aus den Scheiben 2, 3 und dem Abstandhalter 4.

Zusätzlich kann der Innenraum 5 der Isolierverglasung mit einem Schutzgas gefüllt sein.

### Bezugszeichenliste:

- 1: Isolierverglasung
- 2: erste Scheibe
- 3: zweite Scheibe
- 4: Abstandhalter
- 5: Innenraum
- 6.1: erste Scheibenkontaktfläche
- 6.2: zweite Scheibenkontaktfläche
- 7: äußerer Scheibenzwischenraum
- 8: Außenfläche
- 9: Abdichtung
- 10: dünne Glasscheibe
- 11: dicke Glasscheibe
- 12: Laminierfolie
- 13: elektrisch leitfähige Beschichtung
- 14: Sammelleiter
- 15: Anschlusselement
- 16: opak gefärbter Randbereich
- 17: inneres Ende des Anschlusselements
- 18: äußeres Ende des Anschlusselements
- 19: erster Abschnitt des Anschlusselements
- 20: zweiter Abschnitt des Anschlusselements
- 21:: äußerer Rand der Isolierverglasung 1
- 22: Leiterplatine
- 23: Rahmen
- 24: Verglasungsinnenraumfläche

- D1: Dicke der Abdichtung 9
- A: Abstand zwischen Scheibenrand der dicken Scheibe 11 und Sammelleiter 14

## Patentansprüche

1. Isolierverglasung (1) mindestens umfassend
- eine erste Scheibe (2), die auf einer innenseitigen Oberfläche zumindest teilweise eine Beschichtung (13) sowie zwei Sammelleiter (14) zur Kontaktierung der Beschichtung (13) aufweist,
- eine zweite Scheibe (3),
- einen die erste und zweite Scheibe (2, 3) umlaufenden, thermoplastischen Abstandhalter (4), der einen polymeren Grundkörper, zwei Scheibenkontaktflächen (6.1, 6.2), eine Verglasungsinnenraumfläche (24) und eine Außenfläche (8) aufweist, wobei die erste Scheibe (2) an einer ersten Scheibenkontaktfläche (6.1) des Abstandshalters (4) unmittelbar anliegt und die zweite Scheibe (3) an einer zweiten Scheibenkontaktfläche (6.2) des Abstandshalters (4) unmittelbar anliegt,
- einen zwischen der ersten und der zweiten Scheibe (2, 3) eingeschlossenen Innenraum (5),
- einen äußeren Scheibenzwischenraum (7) angrenzend an die Außenfläche (8), in dem eine äußere Abdichtung (9) eingebracht ist,
- ein elektrisches Anschlusselement (15) zur elektrischen Kontaktierung der Beschichtung (13) mit einem äußeren und einem inneren Ende (17, 18), dessen äußeres Ende (18) aus der äußeren Abdichtung (9) herausragt,
wobei das innere Ende (17) des Anschlusselements (15) und ein Sammelleiter (14) elektrisch verbunden und zwischen dem Abstandshalter (4) und der ersten Scheibe (2) außerhalb des von dem Abstandhalter (4) umlaufend gebildeten Innenraums (5) angeordnet sind.

2. Isolierverglasung (1) nach Anspruch 1, **dadurch gekennzeichnet, dass** ein opaker Randbereich (16) dem inneren Ende (17) des Anschlusselements (15) und dem Sammelleiter (14) zugeordnet ist und zur Abdeckung des inneren Endes (17) des Anschlusselements (15) sowie des Sammelleiters (14) vorgesehen ist.

3. Isolierverglasung (1) nach Anspruch 1 oder 2, **dadurch gekennzeichnet, dass** das Anschlusselement (15) ein elektrisches Bauelement, insbesondere ein Kabel und/oder eine biegsame Leiterplatine (22) mit mindestens einem elektrischen Bauelement, ist.

4. Isolierverglasung (1) nach einem der Ansprüche 1 bis 3, **dadurch gekennzeichnet, dass** das Anschlusselement (15) seitlich aus der Isolierverglasung (1) herausgeführt wird.

5. Isolierverglasung (1) nach einem der Ansprüche 2 bis 4, **dadurch gekennzeichnet, dass** der äußere opake Randbereich (16) sich am äußeren Rand der ersten Scheibe (2) mit einer Breite von 10 mm bis 35 mm erstreckt.

6. Isolierverglasung (1) nach einem der Ansprüche 1 bis 5, **dadurch gekennzeichnet, dass** das innere Ende (17) des Anschlusselements (15) mit einem Abstand von 10 mm bis 13 mm vom äußeren Rand der Isolierverglasung (1) den Sammelleiter (14) kontaktiert.

7. Isolierverglasung (1) nach einem der Ansprüche 1 bis 6, **dadurch gekennzeichnet, dass** die Dicke der ersten und /oder zweiten Scheibe (2, 3) 4 mm bis 19 mm beträgt.

8. Isolierverglasung (1) nach einem der Ansprüche 1 bis 7, **dadurch gekennzeichnet, dass** der Abstandshalter (4) eine Höhe von ca. 9 mm aufweist.

9. Isolierverglasung (1) nach einem der Ansprüche 1 bis 8, **dadurch gekennzeichnet, dass** die Beschichtung (13) elektrisch leitfähig oder zumindest elektrisch schaltbar ist.

10. Isolierverglasung (1) nach einem der Ansprüche 1 bis 9, **dadurch gekennzeichnet, dass** die Beschichtung (13) transparent ist.

11. Isolierverglasung (1) nach einem der Ansprüche 1 bis 10, **dadurch gekennzeichnet, dass** die äußere Abdichtung (9) Polysulfide, Silikone, Silikonkautschuk, Polyurethane, Polyacrylate, Copolymere und/oder Gemische davon enthält.

12. Isolierverglasung (1) nach einem der Ansprüche 1 bis 11, **dadurch gekennzeichnet, dass** die erste Scheibe (2) eine Verbundscheibe ist.

13. Isolierverglasung (1) nach einem der Ansprüche 1 bis 12, **dadurch gekennzeichnet, dass** die erste und/oder zweite Scheibe (2, 3) als Strukturglas ausgebildet ist.

14. Verfahren zur Herstellung einer Isolierverglasung (1) nach einem der Ansprüche 1 bis 13, wobei zumindest
a) eine Beschichtung (13) mit einem Anschlusselement (15) elektrisch kontaktiert wird, wobei die Beschichtung (13) auf einer innenseitigen Oberfläche einer ersten Scheibe (2) aufgebracht ist,
b) ein thermoplastischer Abstandshalter (4) aus einem polymeren Grundkörper auf der ersten Scheibe (2) extrudiert wird, so dass der Abstandhalter (4) ein inneres Ende (17) des Anschlusselements (15) umfasst,
c) eine zweite Scheibe (3) auf dem Abstandshalter (4) angebracht wird, so dass der Abstandhalter (4) über jeweils eine Scheibenkontaktfläche (6.1, 6.2) zwischen der ersten Scheibe (2) und der zweiten Scheibe (3) angeordnet ist,
d) die Anordnung verpresst wird und
e) in den äußeren Scheibenzwischenraum (7) eine äußere Abdichtung (9) eingebracht wird.

15. Verwendung einer Isolierverglasung (1) nach einem der Ansprüche 1 bis 13 als Gebäudeinnenverglasung, Gebäudeaußenverglasung und/oder Fassadenverglasung.

## Claims

1. Insulating glazing (1) at least comprising
- a first pane (2), which has, on an inner-side surface at least partially, a coating (13) as well as two busbars (14) for contacting the coating (13),
- a second pane (3),
- a thermoplastic spacer (4), which extends peripherally around the first and second pane (2, 3) and which has a polymeric main body, two pane contact surfaces (6.1, 6.2), a glazing interior surface (24), and an outer surface (8), wherein the first pane (2) rests directly against a first pane contact surface (6.1) of the spacer (4) and the second pane (3) rests directly against a second pane contact surface (6.2) of the spacer (4),
- an interior (5), which is enclosed between the first and the second pane (2, 3),
- an outer interpane space (7) adjacent the outer surface (8), in which an outer seal (9) is inserted,
- an electrical connection element (15) for electrically contacting the coating (13) having an outer and an inner end (17, 18), whose outer end (18) protrudes from the outer seal (9),
wherein the inner end (17) of the connection element (15) and one busbar (14) are electrically connected and are arranged between the spacer (4) and the first pane (2) outside the interior (5) formed peripherally by the spacer (4).

2. Insulating glazing (1) according to claim 1, **characterized in that** an opaque edge region (16) is associated with the inner end (17) of the connection element (15) and the busbar (14) and is provided for covering the inner end (17) of the connection element (15) as well as the busbar (14).

3. Insulating glazing (1) according to claim 1 or 2, **characterized in that** the connection element (15) is an electrical component, in particular a cable and/or a flexible printed circuit board (22) with at least one electrical component.

4. Insulating glazing (1) according to one of claims 1 through 3, **characterized in that** the connection element (15) is routed laterally out of the insulating glazing (1).

5. Insulating glazing (1) according to one of claims 2 through 4, **characterized in that** the outer opaque edge region (16) extends at the outer edge of the first pane (2) with a width of 10 mm to 35 mm.

6. Insulating glazing (1) according to one of claims 1 through 5, **characterized in that** the inner end (17) of the connection element (15) contacts the busbar (14) at a distance of 10 mm to 13 mm from the outer edge of the insulating glazing (1).

7. Insulating glazing (1) according to one of claims 1 through 6, **characterized in that** the thickness of the first and/or second pane (2, 3) is 4 mm to 19 mm.

8. Insulating glazing (1) according to one of claims 1 through 7, **characterized in that** the spacer (4) has a height of approx. 9 mm.

9. Insulating glazing (1) according to one of claims 1 through 8, **characterized in that** the coating (13) is electrically conductive or at least electrically switchable.

10. Insulating glazing (1) according to one of claims 1 through 9, **characterized in that** the coating (13) is transparent.

11. Insulating glazing (1) according to one of claims 1 through 10, **characterized in that** the outer seal (9) contains polysulfides, silicones, silicone rubber, polyurethanes, polyacrylates, copolymers and/or mixtures thereof.

12. Insulating glazing (1) according to one of claims 1 through 11, **characterized in that** the first pane (2) is a composite pane.

13. Insulating glazing (1) according to one of claims 1 through 12, **characterized in that** the first and/or second pane (2, 3) is designed as textured glass.

14. Method for producing an insulating glazing (1) according to one of claims 1 through 13, wherein at least
a) a coating (13) is electrically contacted with a connection element (15), wherein the coating (13) is applied on an inner-side surface of a first pane (2),
b) a thermoplastic spacer (4) comprising a polymeric main body is extruded on the first pane (2) such that the spacer (4) surrounds an inner end (17) of the connection element (15),
c) a second pane (3) is mounted on the spacer (4) such that the spacer (4) is arranged, via a pane contact surface (6.1, 6.2) in each case, between the first pane (2) and the second pane (3),
d) the assembly is pressed, and
e) an outer seal (9) is inserted into the outer interpane space (7).

15. Use of an insulating glazing (1) according to one of claims 1 through 13 as building interior glazing, building exterior glazing, and/or façade glazing.

## Revendications

1. Vitrage isolant (1) comprenant au moins
- une première vitre (2) qui comporte, sur une surface intérieure au moins partielle, un revêtement (13) ainsi que deux barres omnibus (14) en contact avec le revêtement (13),
- une deuxième vitre (3),
- un intercalaire thermoplastique (4), qui s'étend en périphérie autour de la première et de la deuxième vitre (2, 3) et qui a un corps principal polymère, deux surfaces de contact de vitre (6.1, 6.2), une surface intérieure de vitrage (24), et une surface extérieure (8), dans laquelle la première vitre (2) repose directement sur une première surface de contact de vitre (6.1) de l'intercalaire (4) et la deuxième vitre (3) repose directement sur une deuxième surface de contact de vitre (6.2) de l'espaceur (4),
- un intérieur (5), qui est enfermé entre la première et la deuxième vitre (2, 3),
- un espace interpanne extérieur (7) adjacent à la surface extérieure (8), dans lequel un joint extérieur (9) est inséré,
- un élément de connexion électrique (15) pour contacter électriquement le revêtement (13) ayant une extrémité extérieure et une extrémité intérieure (17, 18), dont l'extrémité extérieure (18) fait saillie par rapport au joint extérieur (9),
dans lequel l'extrémité intérieure (17) de l'élément de connexion (15) et un jeu de barres (14) sont connectés électriquement et sont disposés entre l'espaceur (4) et la première vitre (2) à l'extérieur de l'intérieur (5) formé en périphérie par l'espaceur (4).

2. Vitrage isolant (1) selon la revendication 1, **caractérisé en ce qu'**une zone de bord opaque (16) est associée à l'extrémité intérieure (17) de l'élément de connexion (15) et du jeu de barres (14) et est prévue pour couvrir l'extrémité intérieure (17) de l'élément de connexion (15) ainsi que le jeu de barres (14).

3. Vitrage isolant (1) selon la revendication 1 ou 2, **caractérisé par le fait que** l'élément de connexion (15) est un composant électrique, en particulier un câble et/ou un circuit imprimé flexible (22) avec au moins un composant électrique.

4. Vitrage isolant (1) selon l'une des revendications 1 à 3, **caractérisé par le fait que** l'élément de connexion (15) est acheminé latéralement hors du vitrage isolant (1).

5. Vitrage isolant (1) selon l'une des revendications 2 à 4, **caractérisé par le fait que** la zone de bord extérieur opaque (16) s'étend sur le bord extérieur de la première vitre (2) avec une largeur de 10 mm à 35 mm.

6. Vitrage isolant (1) selon l'une des revendications 1 à 5, **caractérisé par le fait que** l'extrémité intérieure (17) de l'élément de connexion (15) entre en contact avec le jeu de barres (14) à une distance de 10 mm à 13 mm du bord extérieur du vitrage isolant (1).

7. Vitrage isolant (1) selon l'une des revendications 1 à 6, **caractérisé par le fait que** l'épaisseur de la première et/ou de la deuxième vitre (2, 3) est comprise entre 4 mm et 19 mm.

8. Vitrage isolant (1) selon l'une des revendications 1 à 7, **caractérisé par le fait que** l'espaceur (4) a une hauteur d'environ 9 mm.

9. Vitrage isolant (1) selon l'une des revendications 1 à 8, **caractérisé par le fait que** le revêtement (13) est conducteur d'électricité ou au moins commutable électriquement.

10. Vitrage isolant (1) selon l'une des revendications 1 à 9, **caractérisé par le fait que** le revêtement (13) est transparent.

11. Vitrage isolant (1) selon l'une des revendications 1 à 10, **caractérisé par le fait que** le joint extérieur (9) contient des polysulfures, des silicones, des caoutchoucs de silicone, des polyuréthanes, des polyacrylates, des copolymères et/ou des mélanges de ceux-ci.

12. Vitrage isolant (1) selon l'une des revendications 1 à 11, **caractérisé par le fait que** la première vitre (2) est une vitre composite.

13. Vitrage isolant (1) selon l'une des revendications 1 à 12, **caractérisé par le fait que** la première et/ou la deuxième vitre (2, 3) est conçue comme un verre texturé.

14. Procédé de fabrication d'un vitrage isolant (1) selon l'une des revendications 1 à 13, dans lequel au moins
a) un revêtement (13) est mis en contact électrique avec un élément de connexion (15), le revêtement (13) étant appliqué sur la surface intérieure d'une première vitre (2),
b) un espaceur thermoplastique (4) comprenant un corps principal polymère est extrudé sur la première vitre (2) de sorte que l'espaceur (4) entoure une extrémité intérieure (17) de l'élément de connexion (15),
c) une deuxième vitre (3) est montée sur l'intercalaire (4) de telle sorte que l'intercalaire (4) soit disposé, par l'intermédiaire d'une surface de contact de vitre (6.1, 6.2) dans chaque cas, entre la première vitre (2) et la deuxième vitre (3),
d) l'ensemble est pressé, et
e) un joint extérieur (9) est inséré dans l'espace interpanneau extérieur (7).

15. Utilisation d'un vitrage isolant (1) selon l'une des revendications 1 à 13 comme vitrage intérieur d'un bâtiment, vitrage extérieur d'un bâtiment et/ou vitrage de façade.
